(19) Europäisches Patentamt
European Patent Office
Office européen des brevets

(11) **EP 4 477 392 A1**

(12) **EUROPEAN PATENT APPLICATION**
published in accordance with Art. 153(4) EPC

(43) Date of publication:
**18.12.2024 Bulletin 2024/51**

(21) Application number: **23752873.2**

(22) Date of filing: **07.02.2023**

(51) International Patent Classification (IPC):
**B29C 65/50** (2006.01)     **B29C 45/14** (2006.01)
**B29C 65/70** (2006.01)     **C09J 7/21** (2018.01)
**C09J 201/00** (2006.01)

(52) Cooperative Patent Classification (CPC):
**B29C 45/14; B29C 65/50; B29C 65/70; C09J 7/21;
C09J 201/00**

(86) International application number:
**PCT/JP2023/004038**

(87) International publication number:
**WO 2023/153409 (17.08.2023 Gazette 2023/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.02.2022 JP 2022018189**

(71) Applicant: **Tomoegawa Corporation
Tokyo 104-8335 (JP)**

(72) Inventors:
• **KONDOU, Yasufumi
  Shizuoka-shi, Shizuoka 421-0192 (JP)**
• **ITO, Hiroshi
  Shizuoka-shi, Shizuoka 421-0192 (JP)**
• **TOCHIHIRA, Jun
  Shizuoka-shi, Shizuoka 421-0192 (JP)**

(74) Representative: **Hoffmann Eitle
Patent- und Rechtsanwälte PartmbB
Arabellastraße 30
81925 München (DE)**

(54) **BONDED LAMINATE AND ELECTRONIC DEVICE HOUSING**

(57)     Provided is a technique that makes it possible to improve the joining strength between a metal material and a resin while facilitating a process of integrating the metal material and the resin. An adhesive laminate 10 of one aspect of the present invention includes a base material layer 30 including a nonwoven fabric, and an adhesive layer 20 laminated on one main surface of the base material layer and including an adhesive having a glass transition temperature Tg of -40°C or more and 20°C or less. An adhesive-impregnated layer 32 impregnated with the adhesive is formed in a part of the base material layer 30 on a side adjacent to the adhesive layer 20. The base material layer 30 has a thickness of 10 to 100 μm. A portion 34 not impregnated with the adhesive in the base material layer 30 has a thickness of 5 to 50 μm. The adhesive-impregnated layer 32 in the base material layer 30 has a thickness of 5 to 95 μm. In addition, the adhesive layer 20 has a thickness of 5 to 60 μm.

**FIG. 1**

EP 4 477 392 A1

## Description

### Technical Field

The present invention relates to an adhesive laminate and an electronic device housing.

### Background Art

As an in-vehicle electronic device housing, a molded article is used in which a metal material (insert material) and a resin (hereinafter, sometimes referred to as "molded resin") are integrated. As a method for integrating a metal material and a resin, an adhesive or an adhesive sheet on a joining surface between the metal material and the resin is used for joining or adhesion.

For example, Patent Literature 1 discloses an adhesive sheet including an adhesive containing an epoxy-based resin, an acrylic resin, and a curing agent, and an adhesive layer in which a core material (woven fabric or nonwoven fabric) is impregnated with the adhesive.

### Citation List

### Patent Literature

Patent Literature 1: JP 2014-70221 A

### Summary of Invention

### Technical Problem

In a case where an adhesive is used for integration of a metal material and a resin, there are production-related problems that it is difficult to adjust the application thickness of the adhesive, the adhesive becomes fluid to flow out due to heat and injection pressure during resin molding, and a solvent removal process is required.

On the other hand, in a case where an adhesive sheet in which a core material such as a nonwoven fabric is impregnated with an adhesive is used, there are problems related to strength characteristics that the nonwoven fabric and the adhesive are easily separated, and when a resin is joined, the resin and the nonwoven fabric are easily separated.

The present invention has been made in view of the above-described problems, and an object of the present invention is to provide a technique that makes it possible to improve the joining strength between a metal material and a resin while facilitating a process of integrating the metal material and the resin.

### Solution to Problem

One aspect of the present invention is an adhesive laminate. The adhesive laminate includes: a base material layer including a nonwoven fabric; and an adhesive layer laminated on one main surface of the base material layer and including an adhesive having a glass transition temperature Tg of -40°C or more and 20°C or less, in which an adhesive-impregnated layer impregnated with the adhesive is formed in a part of the base material layer on a side adjacent to the adhesive layer, the base material layer has a thickness of 10 to 100 $\mu$m, a portion not impregnated with the adhesive in the base material layer has a thickness of 5 to 50 $\mu$m, the adhesive-impregnated layer in the base material layer has a thickness of 5 to 95 $\mu$m, and the adhesive layer has a thickness of 5 to 60 $\mu$m.

In the adhesive laminate of the above-described aspect, the adhesive may contain at least one selected from the group consisting of rubber, a thermosetting resin, and a thermoplastic resin. The adhesive may have a viscosity at 150°C of $0.8 \times 10^3$ Pa s or more.

The nonwoven fabric may be formed of at least one selected from the group consisting of polyphenylene sulfide fibers, polyethylene terephthalate fibers, polyamide fibers, and polybutylene terephthalate fibers.

In a cross section of the base material layer, an area percentage occupied by the nonwoven fabric may be 5 to 50%. The nonwoven fabric may have a basis weight of 15 to 120 g/m$^2$.

Another aspect of the present invention is an electronic device housing. In the electronic device housing, a metal layer and a resin layer are joined with the adhesive laminate according to any one of the aspects described above interposed between the metal layer and the resin layer, the metal layer and the resin layer are joined with the adhesive laminate interposed between the metal layer and the resin layer such that the metal layer is in contact with the adhesive layer, and the resin layer including a resin is in contact with the base material layer on a side opposite to a side on which the adhesive layer is laminated, a resin-impregnated layer impregnated with the resin is formed in a part of the base material layer on the side in contact with the resin layer, and the resin-impregnated layer and the adhesive-impregnated layer are in contact with each other in the base material layer.

**Advantageous Effects of Invention**

According to the present invention, it is possible to improve the joining strength between a metal material and a resin while facilitating a process of integrating the metal material and the resin.

**Brief Description of Drawings**

Fig. 1 is a schematic cross-sectional view illustrating the configuration of an adhesive laminate according to an embodiment.
Fig. 2 is a schematic cross-sectional view illustrating the configuration of an electronic device housing according to an embodiment.
Figs. 3A to 3D are process cross-sectional views illustrating a method for producing the electronic device housing.
Fig. 4A is a plan view of an evaluation sample including a resin layer 120, an adhesive laminate 10, and a metal layer 110. Fig. 4B is a cross-sectional view of the evaluation sample taken along line A-A' illustrated in Fig. 4A.
Fig. 5 is a drawing illustrating the outline of an airtightness test performed in joinability evaluation or durability evaluation.

**Description of Embodiments**

Hereinafter, embodiments of the present invention will be described in detail. In the present specification, the notation "a to b" in the description of a numerical range represents a or more and b or less unless otherwise specified.

(Adhesive laminate)

The configuration of an adhesive laminate according to an embodiment will be described with reference to the drawings.

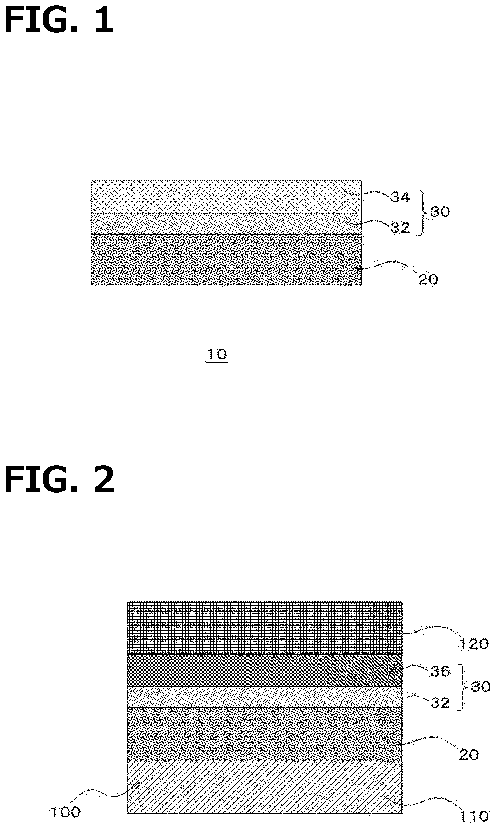

Fig. 1 is a schematic cross-sectional view illustrating the configuration of an adhesive laminate 10 according to the embodiment. As illustrated in Fig. 1, the adhesive laminate 10 includes an adhesive layer 20 and a base material layer 30.
The adhesive layer 20 is laminated on one main surface of the base material layer 30 described later. The adhesive layer 20 contains an adhesive having a glass transition temperature Tg of -40°C or more and 20°C or less. When the Tg of the adhesive is -40°C or more and 20°C or less, the flexibility at a low temperature can be secured. This produces the effect of easily maintaining the adhesive strength even when a thermal stress such as a heat cycle is applied.
Examples of the adhesive described above include at least one selected from the group consisting of rubber, a thermosetting resin, and a thermoplastic resin.
Examples of the rubber include nitrile rubber (NBR), hydrogenated nitrile rubber (HNBR), acrylic rubber (ACM), and fluoro-rubber (FKM).
Examples of the thermosetting resin include epoxy resins, maleimide resins, and resol phenol resins.
Examples of the thermoplastic resin include novolac phenol resins, rosin ester resins, and terpene phenol resins.
The components of the adhesive can be changed according to the application and the type of an adhesion object. For example, in a case where airtightness or water tightness is required as necessary characteristics, it is preferable to combine the rubber and the thermoplastic resin. In addition, in a case where oil resistance is required as necessary characteristics, it is preferable to combine the rubber and the thermosetting resin, or to use the fluoro-rubber (FKM).
Note that the adhesive may contain a filler or an additive as another component. Examples of the other component include inorganic fillers, flame retardants, conductivity imparting agents, crystal nucleating agents, ultraviolet absorbers, antioxidants, vibration damping agents, antibacterial agents, insect repellents, deodorants, coloring inhibitors, heat stabilizers, antistatic agents, plasticizers, lubricants, coloring agents, foaming agents, foam inhibitors, coupling agents, tackifier resins such as tackifiers, and curing agents.
The lower limit of the viscosity of the adhesive at 150°C is $0.8 \times 10^3$ Pa s or more, and preferably $1 \times 10^3$ Pa·s, $5 \times 10^3$ Pa·s, or $1 \times 10^4$ Pa·s or more. By setting the above lower limit of the viscosity to $0.8 \times 10^3$ Pa·s or more, it is possible to inhibit separation of the adhesive layer 20 due to heat and pressure received at the time of injection molding of a molded resin. In addition, when the adhesive described above enters voids of a nonwoven fabric forming the base material layer 30 described later, it is possible to inhibit introduction of voids into the adhesive, and eventually, it is possible to improve the airtightness.

The upper limit of the viscosity of the adhesive at 150°C is not particularly limited, but for example, is preferably 5 $\times$ 10$^5$ Pa·s or less, and more preferably 5 $\times$ 10$^4$ Pa s or less.

The thickness of the adhesive layer 20 is 5 to 60 $\mu$m, and preferably 10 to 55 $\mu$m, or 15 to 50 $\mu$m.

By setting the lower limit of the thickness of the adhesive layer 20 to the above value, the adhesive layer 20 becomes easy to follow deformation in a heat cycle of about -40°C to 130°C, making it possible to sufficiently maintain the airtightness. On the other hand, by setting the upper limit of the thickness of the adhesive layer 20 to the above value, it is possible to inhibit the adhesive from flowing out under a pressure at the time of injecting the molded resin even when the adhesive having a Tg of -40°C or more and 20°C or less is used.

The base material layer 30 contains a nonwoven fabric. The nonwoven fabric is formed of at least one selected from the group consisting of polyphenylene sulfide (PPS) fibers, polyethylene terephthalate (PET) fibers, polyamide (PA) fibers, and polybutylene terephthalate (PBT) fibers, for example.

As the nonwoven fabric used for the base material layer 30, it is preferable to select a nonwoven fabric that is compatible with the molded resin. For example, in a case where PPS is used as the molded resin, it is preferable to use PPS fibers for the nonwoven fabric. In a case where PBT is used as the molded resin, it is preferable to use PBT fibers or PET fibers for the nonwoven fabric. In addition, in a case where PA is used for the molded resin, it is preferable to use PA fibers or PPS fibers for the nonwoven fabric.

In the cross section of the base material layer 30, an area percentage occupied by the nonwoven fabric is preferably 5 to 50%, more preferably 20 to 45%, and still more preferably 30 to 40%. By setting the area percentage within the above range, it is possible to obtain a sufficient anchor effect between the molded resin and the nonwoven fabric, which is caused by the molded resin entering the nonwoven fabric by injection molding, while inhibiting generation of voids in the base material layer.

The basis weight of the nonwoven fabric is preferably 15 to 120 g/m$^2$, more preferably 20 to 110 g/m$^2$, and still more preferably 30 to 100 g/m$^2$.

The tensile strength of the nonwoven fabric in the MD direction measured in accordance with JIS-P8113 is preferably 0.2 kN/m to 8.0 kN/m, more preferably 0.4 kN/m to 7.0 kN/m, and still more preferably 0.6 kN/m to 6.0 kN/m. In addition, the tensile strength of the nonwoven fabric in the CD direction measured in accordance with JIS-P8113 is preferably 0.05 kN/m to 4.0 kN/m, more preferably 0.10 kN/m to 3.0 kN/m, and still more preferably 0.15 kN/m to 2.0 kN/m.

By setting the tensile strength of the nonwoven fabric in the MD direction (flow direction during production of the nonwoven fabric, longitudinal direction of the adhesive laminate 10) and the CD direction (direction orthogonal to the MD direction) within the above ranges, the mechanical strength of the base material layer 30 can be enhanced, and eventually the durability of the adhesive laminate 10 can be enhanced.

In the base material layer 30, an adhesive-impregnated layer 32 impregnated with the adhesive described above is formed in a part of the base material layer 30 on the side adjacent to the adhesive layer 20.

The thickness of the base material layer 30 is 10 to 100 $\mu$m, and preferably 20 to 90 $\mu$m or 30 to 80 $\mu$m.

In the base material layer 30, the thickness of the adhesive-impregnated layer 32 is 5 to 95 $\mu$m, and preferably 10 to 90 $\mu$m or 15 to 85 $\mu$m.

In the base material layer 30, the thickness of a portion not impregnated with the adhesive (region denoted by reference numeral 34 in Fig. 1) is 5 to 50 $\mu$m, and preferably 10 to 45 $\mu$m or 15 to 40 $\mu$m.

By setting the thickness of the base material layer 30 and the thicknesses of the adhesive-impregnated layer 32 and the portion not impregnated with the adhesive within the above ranges, the joining strength and airtightness between a metal material and the molded resin can be improved.

More specifically, by setting the lower limit of the thickness of the adhesive-impregnated layer 32 to the above value, it is possible to inhibit separation between the adhesive and the nonwoven fabric at the time of injection molding of the molded resin. On the other hand, by setting the upper limit of the thickness of the adhesive-impregnated layer 32 to the above value, a sufficient thickness can be secured for the portion not impregnated with the adhesive (portion of only the nonwoven fabric), and a sufficient anchor effect between the molded resin and the nonwoven fabric can be obtained.

By setting the lower limit of the thickness of the portion not impregnated with the adhesive (portion of only the nonwoven fabric) to the above value, a sufficient anchor effect between the molded resin and the nonwoven fabric can be obtained, and eventually the occurrence of separation between the molded resin and the nonwoven fabric can be inhibited. On the other hand, by setting the upper limit of the thickness of the portion not impregnated with the adhesive (portion of only the nonwoven fabric) to the above value, the molded resin can sufficiently enter the inside of the nonwoven fabric at the time of injection molding of the molded resin, and it is possible to inhibit generation of voids in the base material layer 30, and eventually to improve the airtightness.

The nonwoven fabric constituting the base material layer 30 preferably exhibits hydrophilicity, and for example, this nonwoven fabric preferably has a contact angle of 90 degrees or less.

The adhesive laminate 10 described above has at least the following effects in addition to the effects described above.

Since resin molding can be performed in a state where the adhesive laminate is stuck to the metal material (insert material), the resin molding can be easily incorporated into a production process, and a process of integrating the metal material and the molded resin can be facilitated.

Since the adhesive is held in the nonwoven fabric, even when the adhesive having a Tg of -40°C or more and 20°C or less is used, not only the adhesive is inhibited from becoming fluid at a high temperature, but also a sufficient adhesive holding force is secured against a thermal stress due to slow cooling after molding of the molded resin. Therefore, the separation of the adhesive is inhibited.

Since the adhesive laminate 10 according to the embodiment has a sheet shape in a solid state at normal temperature, there is no concern about a change in solid content due to volatilization of a solvent during storage, an increase in coating material viscosity, and the like as compared with a solvent-containing type liquid adhesive. Therefore, the adhesive laminate 10 is excellent in storage stability.

(Method for producing adhesive laminate)

As a method for producing the adhesive laminate 10 according to the embodiment, a sheet with an adhesive layer is fabricated by applying a predetermined application amount of solvent-containing adhesive to a release film of PET or the like and removing the solvent by a ventilation oven or the like. A process of applying a temperature of 80 to 200°C in a state where the base material layer 30 is laminated on the obtained sheet with a pressure-sensitive adhesive layer (pressure-sensitive adhesive layer with a release film) to impregnate a part of the base material layer 30 with the melted adhesive is performed. As a result, the adhesive-impregnated layer 32 having a predetermined thickness is formed in a part of the base material layer 30. The thickness of the adhesive-impregnated layer 32 can be set to a desired value by adjusting the amount of application of the adhesive, the applied temperature, and the pressure at the time of lamination.

(Electronic device housing)

Fig. 2 is a schematic cross-sectional view illustrating the configuration of an electronic device housing 100 according to an embodiment.

The electronic device housing 100 according to the embodiment has a structure in which a metal layer 110 and a resin layer 120 are joined with the adhesive laminate 10 described above interposed therebetween.

The metal layer 110 and the resin layer 120 are joined with the adhesive laminate 10 interposed therebetween such that the metal layer 110 is in contact with the adhesive layer 20 described above, and the resin layer 120 containing a resin is in contact with the base material layer 30 on the side opposite to the side on which the adhesive layer 20 is laminated.

A resin-impregnated layer 36 impregnated with the resin is formed in a part of the base material layer 30 on the side in contact with the resin layer 120. The resin-impregnated layer 36 and the adhesive-impregnated layer 32 are in contact with each other in the base material layer 30.

Specific examples of the electronic device housing include electronic components such as a busbar and a terminal. These electronic components may be used to be mounted on automobiles, used for precision components, or the like. Since the electronic device housing of the present embodiment is excellent in adhesive strength and airtightness/-water tightness, the electronic device housing is suitably mounted on automobiles which demand high levels of these characteristics.

(Method for producing electronic device housing)

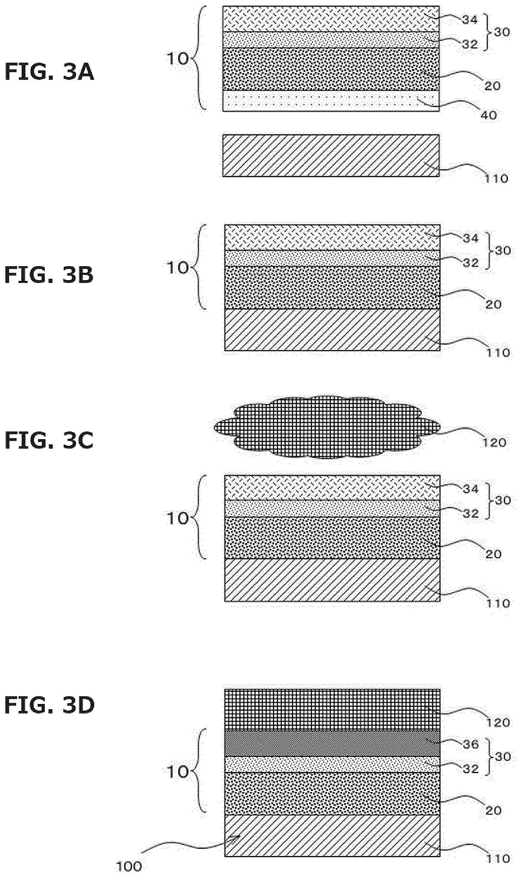

Figs. 3A to 3D are process cross-sectional views illustrating a method for producing the electronic device housing.

As illustrated in Fig. 3A, the metal layer 110 is set in a mold (not illustrated). Examples of the material of the metal layer 110 include SUS, aluminum, copper, and plated (for example, nickel-plated, tin-plated) metal materials. On the other hand, the adhesive laminate 10 in which a release film 40 is laminated on the adhesive layer 20 is prepared. Examples of the material of the release film 40 include polystyrene terephthalate (PET).

Next, as illustrated in Fig. 3B, the release film 40 is removed, and the adhesive laminate 10 is stuck to the metal layer 110. In a case where a thermosetting resin is used as the adhesive for the adhesive layer 20, the adhesive laminate 10 is stuck to the metal layer 110 and then heated to cure the adhesive, so that the metal layer 110 and the adhesive layer 20 can firmly adhere to each other, and heat resistance can be imparted.

Next, as illustrated in Fig. 3C, the molded resin is injection-molded into a space where the adhesive laminate 10 is stuck to the metal layer 110. At this time, the melted molded resin flows into the base material layer 30, and the melted adhesive flows into the base material layer 30, so that the molded resin and the adhesive come into contact with each other. As a result, the anchor effect is exerted between the molded resin and the nonwoven fabric, and the metal layer 110 and the resin layer 120 are firmly joined together. Examples of the molded resin include engineering plastics such as PPS, PBT, and PA, or super engineering plastics.

Next, as illustrated in Fig. 3D, demolding is performed after completion of the injection molding, whereby the electronic device housing 100 can be obtained.

Molding conditions vary depending on the type of the molded resin and the like. For example, the molded resin can be molded under the conditions of a mold temperature of 40 to 160°C, a cylinder temperature of 200 to 400°C, an injection pressure of 20 to 120 MPa, a holding pressure of 20 to 120 MPa, an injection speed of 10 to 120 mm/sec, and the like.

Although the embodiments of the present invention have been described above, these are examples of the present invention, and various configurations other than the above can be adopted.

Examples

Hereinafter, the present invention will be described using Examples and Comparative Examples, but the present invention is not limited to them.

<Blending of adhesive>

According to the respective components and the corresponding blending amounts listed in Table 1, adhesives of blends 1 to 9 were prepared.

<Fabrication of adhesive laminate>

(Example 1)

100 g of the adhesive of blend 4 was diluted and mixed with 400 g of a methyl ethyl ketone solvent to obtain a mixed solution. The mixed solution was applied onto a release PET film so as to have a thickness of 48 $\mu$m, and then subjected to a drying treatment (100°C/5 minutes) in a ventilation oven to fabricate an adhesive layer with a release film. Furthermore, the above adhesive layer with a release film and a nonwoven fabric (thickness: 50 $\mu$m, made of polyphenylene sulfide (PPS)) were thermally stuck to each other at 150°C such that the surface of the adhesive layer on the side to which the release film was not stuck and the above nonwoven fabric would come into contact with each other to fabricate an adhesive laminate with a release film. The adhesive laminate used at the time of each evaluation described later is in a state in which the release film has been separated.

(Examples 2 to 17, Comparative Examples 1 to 5)

Adhesive laminates of Examples 2 to 17 and Comparative Examples 1 to 5 were fabricated by the same fabrication method as in Example 1 except that the blends, the thickness of the base material layer (thickness of each of the adhesive-impregnated layer and the adhesive-non-impregnated layer), and the thickness of the adhesive layer were adjusted as listed in Table 2.

**EP 4 477 392 A1**

[Table 1]

|  |  | Blend 1 | Blend 2 | Blend 3 | Blend 4 | Blend 5 | Blend 6 | Blend 7 | Blend 8 | Blend 9 |
|---|---|---|---|---|---|---|---|---|---|---|
| Bis A Liquid Epoxy Resin (Molecular Weight: 370, Epoxy Equivalent: 190) | Mass Part(s) | 20 |  | 10 |  | 60 |  |  |  | 5 |
| Polyfunctional Epoxy Resin (Molecular Weight: 392, Tetrafunction, Epoxy Equivalent: 98) |  |  | 20 |  |  |  |  |  |  |  |
| Tackifier = Terpene Phenol Resin (Softening Point: 160°C) |  |  |  |  | 10 |  |  | 5 | 20 |  |
| Acrylic Rubber (Tg = 10°C, Mw = 900,000) |  | 100 |  |  |  | 100 |  |  |  | 100 |
| Acrylic Rubber (Tg = 10°C, Mw = 900,000, Containing Carboxyl Group) |  |  | 100 |  |  |  |  |  |  |  |
| Acrylic Rubber (Tg = -40°C, Mw = 1,200,000) |  |  |  | 100 | 100 |  | 100 | 100 | 100 |  |
| Curing Agent (2-Methyl-4-Methylimidazole) |  | 5 | 5 | 5 |  | 5 |  |  |  | 1 |
| Plasticizer (Liquid Acrylic Polymer, Tg = -60°C, Mw = 3,000) |  |  |  |  |  |  | 40 |  |  |  |

[Table 2]

| | | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 | Example 17 | Comparative Example 1 | Comparative Example 2 | Comparative Example 3 | Comparative Example 4 | Comparative Example 5 |
|---|---|---|---|---|---|---|---|---|---|---|---|---|---|---|---|---|---|---|---|---|---|---|---|---|
| 1. Base Material Layer (2 + 3) | Thickness | μm | 50 | 55 | 100 | 100 | 10 | 50 | 50 | 50 | 50 | 55 | 50 | 100 | 100 | 50 | 50 | 50 | 50 | 8 | 8 | 50 | 50 | 50 |
| 2. Adhesive-Impregnated Layer | Thickness | μm | 25 | 5 | 95 | 50 | 5 | 25 | 25 | 25 | 25 | 25 | 25 | 50 | 50 | 25 | 25 | 25 | 25 | 5 | 3 | 25 | 25 | 25 |
| 3. Adhesive-Non-Impregnated Layer | Thickness | μm | 25 | 50 | 5 | 50 | 5 | 25 | 25 | 25 | 25 | 30 | 25 | 50 | 50 | 25 | 25 | 25 | 25 | 3 | 5 | 25 | 25 | 25 |
| Adhesive Layer | Thickness | μm | 30 | 30 | 30 | 30 | 30 | 5 | 60 | 30 | 30 | 30 | 30 | 30 | 30 | 30 | 30 | 30 | 30 | 30 | 30 | 3 | 30 | 30 |
| Pressure-Sensitive Adhesive | Blend | | Blend 4 | Blend 4 | Blend 4 | Blend 4 | Blend 4 | Blend 4 | Blend 4 | Blend 1 | Blend 2 | Blend 4 | Blend 4 | Blend 4 | Blend 4 | Blend 3 | Blend 7 | Blend 8 | Blend 9 | Blend 4 | Blend 4 | Blend 4 | Blend 5 | Blend 6 |
| | Glass Transition Temperature | °C | -30 | -30 | -30 | -30 | -30 | -30 | -30 | 20 | 20 | -30 | -30 | -30 | -30 | -30 | -40 | -20 | 10 | -30 | -30 | -30 | 30 | -50 |
| | Viscosity at 150°C | Pa·s | $1\times10^3$ | $1\times10^3$ | $1\times10^3$ | $1\times10^3$ | $1\times10^3$ | $1\times10^3$ | $1\times10^3$ | $2\times10^4$ | $6\times10^4$ | $1\times10^3$ | $1\times10^3$ | $1\times10^3$ | $1\times10^3$ | $5\times10^3$ | $8\times10^2$ | $2\times10^3$ | $1\times10^4$ | $1\times10^3$ | $1\times10^3$ | $1\times10^3$ | $1\times10^5$ | $5\times10^2$ |
| Base Material Layer | Area Percentage Occupied by Nonwoven Fabric | % | 30 | 54 | 30 | 30 | 30 | 30 | 30 | 30 | 30 | 54 | 22 | 89 | 96 | 30 | 30 | 30 | 30 | 28 | 28 | 30 | 30 | 30 |
| | Basis Weight of Nonwoven Fabric | g/m² | 20 | 40 | 40 | 40 | 4 | 20 | 20 | 20 | 20 | 40 | 15 | 120 | 130 | 20 | 20 | 20 | 20 | 3 | 3 | 20 | 20 | 20 |
| | Density of Nonwoven Fabric | g/cm³ | 0.4 | 0.7 | 0.4 | 0.4 | 0.4 | 0.4 | 0.4 | 0.4 | 0.4 | 0.7 | 0.3 | 1.2 | 1.3 | 0.4 | 0.4 | 0.4 | 0.4 | 0.375 | 0.375 | 0.4 | 0.4 | 0.4 |
| | Tensile Strength in MD Direction | kN/m | 1.5 | 3.3 | 1.5 | 1.5 | 0.2 | 1.5 | 1.5 | 1.5 | 1.5 | 3.3 | 1.2 | 5 | 5.4 | 1.5 | 1.5 | 1.5 | 1.5 | 0.15 | 0.15 | 1.5 | 1.5 | 1.5 |
| | Tensile Strength in CD Direction | kN/m | 0.5 | 1.3 | 0.8 | 0.8 | 0.05 | 0.5 | 0.5 | 0.5 | 0.5 | 1.3 | 0.4 | 2.5 | 2.8 | 0.5 | 0.5 | 0.5 | 0.5 | 0.04 | 0.04 | 0.5 | 0.5 | 0.5 |
| Evaluation Result | Joinability Evaluation | | A | A | B | A | B | A | A | A | A | A | A | A | B | A | A | A | A | C | C | D | C | D |
| | Durability Evaluation | | A | A | A | A | B | B | A | B | C | A | A | B | C | A | A | A | B | D | D | D | D | D |
| | Comprehensive Evaluation | | A | A | B | A | B | B | A | B | C | A | A | B | C | A | A | A | B | D | D | D | D | D |

<Measurement of thickness>

An electron micrograph of the cross section of the adhesive laminate was taken at a magnification of 1000 times.

Lines were drawn at a position where the thickness of the adhesive-impregnated layer was the thickest and a position where the thickness of the adhesive-impregnated layer was the thinnest in the extending direction of the adhesive laminate, respectively, and an intermediate line of these two lines was defined as a boundary between the adhesive-impregnated layer and the adhesive-non-impregnated layer.

In addition, lines were drawn at the most protruding position and the most recessed position in one main surface of the base material layer, respectively, and an intermediate line of these two lines was defined as a reference line of the one main surface of the base material layer.

Similarly, lines were drawn at the most protruding position and the most recessed position in the other main surface of the base material layer, respectively, and an intermediate line of these two lines was defined as a reference line of the other main surface of the base material layer.

A difference between one reference line of the base material layer and the other reference line of the base material layer was defined as the thickness of the base material layer. In addition, a difference between the boundary between the adhesive-impregnated layer and the adhesive-non-impregnated layer, and the other reference line (reference line on the adhesive layer side) of the base material layer was defined as the thickness of the adhesive-impregnated layer. In addition, a difference between the thickness of the base material layer and the thickness of the adhesive-impregnated layer was defined as the thickness of the adhesive-non-impregnated layer.

<Viscosity measurement>

A measurement sample was obtained by collecting the adhesive of the adhesive layer from the adhesive laminate, and adjusting only the adhesive to a thickness of 1 mm. Shear viscosity measurement was performed using a rheometer (HAAKE MARS iQ manufactured by Thermo Fisher Scientific K.K.). Conditions for the shear viscosity measurement are as follows.

Evaluation probe: 20 mmφ parallel plate
Measurement load: 15 N
Measurement frequency: 1 Hz
Temperature condition: temperature increase from 25°C to 150°C at 10°C/min (viscosity when the temperature reaches 150°C is defined as viscosity at 150°C)

<Area percentage>

The cross section of the adhesive laminate was cut out, and the cross section of the base material layer was observed at a magnification of 1000 times using an optical microscope (digital microscope VHX-500 manufactured by KEYENCE CORPORATION). Specifically, the obtained image was subjected to a binarization treatment to distinguish a fibrous material from other materials, and then the area percentage (%) of the fibrous material present per unit area was obtained.

<Basis weight>

The adhesive was removed from the nonwoven fabric using an adhesive-solubilizing solvent (methyl ethyl ketone), the above adhesive-solubilizing solvent was dried, then the nonwoven fabric was cut into 200 mm × 250 mm, and the weight was measured using an electronic balance. The basis weight ($g/m^2$) was calculated according to the following formula.

$$\text{Basis weight} = \text{weight/area } (g/m^2)$$

<Density>

The adhesive was removed from the nonwoven fabric using an adhesive-solubilizing solvent (methyl ethyl ketone), the above adhesive-solubilizing solvent was dried, and then the thickness of the nonwoven fabric was measured in accordance with JIS P8118 (2014). The density of the nonwoven fabric was calculated from the following formula using the value of the basis weight measured by the above method.

The density was calculated from the basis weight/thickness = ($g/cm^3$).

<Tensile strength>

The adhesive laminate (test piece) was prepared by cutting the nonwoven fabric to have a width of 15 mm in each of the MD direction and the CD direction. The tensile strength of this sample was measured by a universal tension testing machine. Measurement conditions in the tensile strength measurement are as follows.

Temperature: 25°C
Tensile speed: 20 mm/min
Test length: Adjust a gripper position such that the test length becomes 180 mm

The tensile strength measurement was started under the above measurement conditions, and continued until the test piece was broken. Using a maximum strength F [kN] and a measurement width W [m] obtained at this time, the tensile strength [kN/m] was calculated according to the following formula.

$$\text{Tensile strength} = F/W = F/0.015 \ [\text{kN/m}]$$

(Evaluation sample)

The configuration of an evaluation sample used for the evaluation of each of joinability and durability will be described.

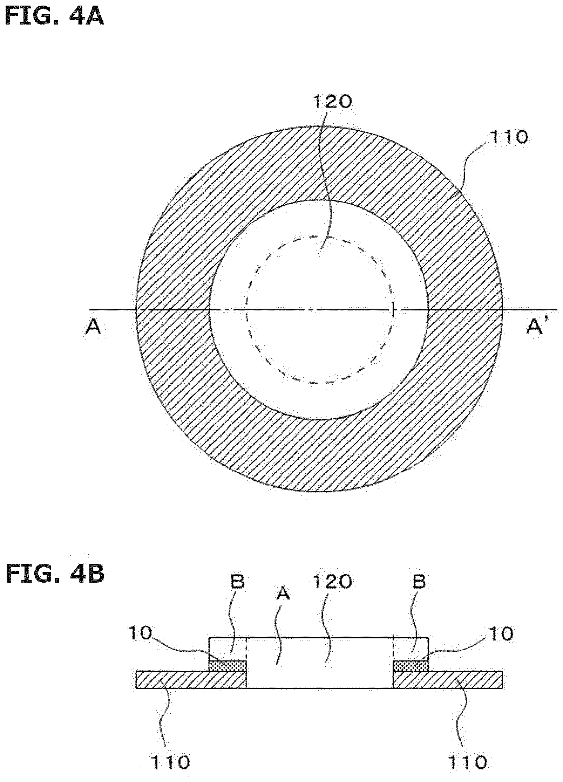

Fig. 4A is a plan view of the evaluation sample including the resin layer 120, the adhesive laminate 10, and the metal layer 110. Fig. 4B is a cross-sectional view of the evaluation sample taken along line A-A' illustrated in Fig. 4A.

The shape of the metal layer 110 is a doughnut shape in which a hole (hole diameter: 20mmΦ) is formed in the center portion of a disk-shaped member (outer diameter: 50mmΦ, thickness: 1 mm).

The planar shape and cross-sectional shape of the resin layer 120 are a circular shape (see Fig. 4A) and a substantially T-shape (see Fig. 4B), respectively.

More specifically, the cross-sectional shape of the resin layer 120 includes a columnar portion A having an outer diameter of 20mmΦ, and a donut-shaped flange portion B surrounding the upper end of the portion A. A portion of the metal layer 110 overlapping the flange portion B is joined by the adhesive laminate 10.

(Method for fabricating evaluation sample)

A method for fabricating the evaluation sample used for the evaluation of each of j oinability and durability will be described.

<Fabrication of adhesive laminate>

The above-described adhesive laminate with a release film was cut into a circle having an outer diameter of 30mmΦ, and a hole having an inner diameter of 20mmΦ was further formed in the center portion of the circle to obtain a donut-shaped adhesive laminate with a release film. The release film was separated from the obtained adhesive laminate with a release film to obtain an adhesive laminate.

<Fabrication of evaluation sample>

The evaluation sample in which the metal layer (metal member) and the molded resin were joined was fabricated using the adhesive laminate described above.

Specifically, the adhesive laminate was disposed on the metal layer such that the hole provided in the metal layer would overlap the hole provided in the adhesive laminate. In this state, the molded resin was molded using a mold having a predetermined shape and an injection molding machine. Conditions at the time of molding the molded resin are as follows.

Metal member: A5052 material (aluminum alloy)
Molded resin: PPS-GF30 manufactured by KINGFA SCI. & TECH. Co., Ltd.
Mold temperature: 150°C
Cylinder temperature: 310°C
Holding pressure: 60 MPa
Injection speed: 60 mm/min

«Joinability evaluation»

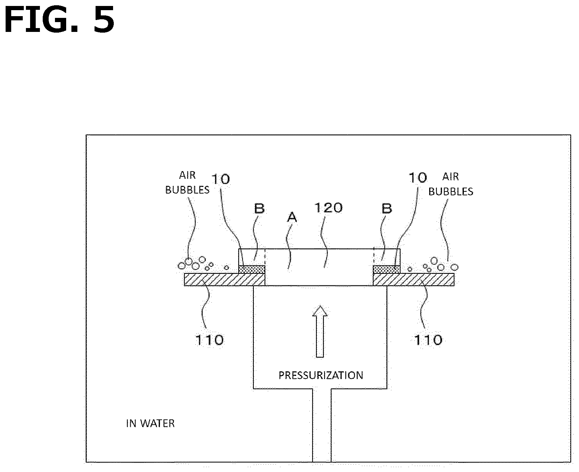

For each evaluation sample, the joinability was evaluated by an airtightness test. The details of the airtightness test are described below. As illustrated in Fig. 5, the molded resin 120 filling the hole portion provided in the metal layer 110 was air-pressurized at pressures of 50 kPa, 100 kPa, and 200 kPa in water in a state where the lower portion of the evaluation sample was sealed. As illustrated in Fig. 5, the presence or absence of air bubbles generated from the side surface of the adhesive laminate 10 was checked, and the j oinability was evaluated according to the following criteria.

A (excellent): No air bubbles are generated during air pressurization of 50 kPa, 100 kPa, and 200 kPa.
B (good): Leakage occurs during air pressurization of 200 kPa, and no air bubbles are generated during air pressurization of 50 kPa and 100 kPa.
C (acceptable): Leakage occurs during air pressurization of 100 kPa and 200 kPa, and no air bubbles are generated during air pressurization of 50 kPa.
D (unacceptable): Separation occurs after molding (after demolding).

«Durability evaluation»

The durability of each evaluation sample was evaluated using a temperature cycle test tank. Specifically, holding the evaluation sample at -40°C (holding time: 30 minutes) and at 125°C (holding time: 30 minutes) was defined as 1 cycle, and 1000 cycles were performed. The evaluation sample that had undergone a durability test of 1000 cycles was evaluated by an airtightness test in water in the same manner as the joinability evaluation. The criteria for durability evaluation are as follows.

A (excellent): No air bubbles are generated during air pressurization of 50 kPa, 100 kPa, and 200 kPa.
B (good): Leakage occurs during air pressurization of 200 kPa, and no air bubbles are generated during air pressurization of 50 kPa and 100 kPa.
C (acceptable): Leakage occurs during air pressurization of 100 kPa and 200 kPa, and no air bubbles are generated during air pressurization of 50 kPa.
D (unacceptable): Separation occurs after a durability test of 1000 cycles.

<<Comprehensive evaluation>>

The comprehensive evaluation of each evaluation sample was determined according to the following criteria.

A (excellent): Both joinability and durability are A
B (good): One of joinability and durability is A, and the other is B
C (acceptable): One of j oinability and durability is A, B, or C and the other is C
D (unacceptable): One of joinability and durability is A, B, C, or D, and the other is D.

As listed in Table 2, the comprehensive evaluations of the evaluation samples using the respective adhesive laminates of Examples 1 to 17 were any one of A (excellent), B (good), and C (acceptable). On the other hand, the comprehensive evaluations of the evaluation samples using the respective adhesive laminates of Comparative Examples 1 to 5 were all D (unacceptable).

Reference Signs List

10      Adhesive laminate
20      Adhesive layer
30      Base material layer
32      Adhesive-impregnated layer
34      Portion not impregnated with an adhesive
36      Resin-impregnated layer
40      Release film
100     Electronic device housing
110     Metal layer
120     Resin layer

**Claims**

1. An adhesive laminate comprising:

   a base material layer including a nonwoven fabric; and
   an adhesive layer laminated on one main surface of the base material layer and including an adhesive having a glass transition temperature Tg of -40°C or more and 20°C or less, wherein
   an adhesive-impregnated layer impregnated with the adhesive is formed in a part of the base material layer on a side adjacent to the adhesive layer,
   the base material layer has a thickness of 10 to 100 $\mu$m,
   a portion not impregnated with the adhesive in the base material layer has a thickness of 5 to 50 $\mu$m,
   the adhesive-impregnated layer in the base material layer has a thickness of 5 to 95 $\mu$m, and
   the adhesive layer has a thickness of 5 to 60 $\mu$m.

2. The adhesive laminate according to claim 1, wherein the adhesive contains at least one selected from the group consisting of rubber, a thermosetting resin, and a thermoplastic resin.

3. The adhesive laminate according to claim 1 or 2, wherein the adhesive has a viscosity at 150°C of $0.8 \times 10^3$ Pa·s or more.

4. The adhesive laminate according to any one of claims 1 to 3, wherein the nonwoven fabric is formed of at least one selected from the group consisting of polyphenylene sulfide fibers, polyethylene terephthalate fibers, polyamide fibers, and polybutylene terephthalate fibers.

5. The adhesive laminate according to any one of claims 1 to 4, wherein in a cross section of the base material layer, an area percentage occupied by the nonwoven fabric is 5 to 50%.

6. The adhesive laminate according to any one of claims 1 to 5, wherein the nonwoven fabric has a basis weight of 15 to 120 g/m$^2$.

7. An electronic device housing, wherein

   a metal layer and a resin layer are joined with the adhesive laminate according to any one of claims 1 to 6 interposed between the metal layer and the resin layer,
   the metal layer and the resin layer are joined with the adhesive laminate interposed between the metal layer and the resin layer such that the metal layer is in contact with the adhesive layer, and the resin layer including a resin is in contact with the base material layer on a side opposite to a side on which the adhesive layer is laminated,
   a resin-impregnated layer impregnated with the resin is formed in a part of the base material layer on the side in contact with the resin layer, and
   the resin-impregnated layer and the adhesive-impregnated layer are in contact with each other in the base material layer.

# FIG. 1

10

# FIG. 2

FIG. 3A

FIG. 3B

FIG. 3C

FIG. 3D

## FIG. 4A

## FIG. 4B

# FIG. 5

## INTERNATIONAL SEARCH REPORT

International application No.

**PCT/JP2023/004038**

### A. CLASSIFICATION OF SUBJECT MATTER

**B29C 65/50**(2006.01)i; **B29C 45/14**(2006.01)i; **B29C 65/70**(2006.01)i; **C09J 7/21**(2018.01)i; **C09J 201/00**(2006.01)i
FI:   B29C65/50; B29C45/14; B29C65/70; C09J7/21; C09J201/00

According to International Patent Classification (IPC) or to both national classification and IPC

### B. FIELDS SEARCHED

Minimum documentation searched (classification system followed by classification symbols)

B29C65/50; B29C45/14; B29C65/70; C09J7/21; C09J201/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2004/083329 A1 (IDEMITSU UNITECH CO., LTD.) 30 September 2004 (2004-09-30) claims, p. 8, line 16 to p. 9, line 16, p. 10, lines 6-15, p. 11, lines 8-20, p. 12, lines 22-27, fig. 1 | 1-7 |
| Y | JP 2001-200218 A (HITACHI KASEI POLYMER CO LTD) 24 July 2001 (2001-07-24) claims, paragraphs [0019]-[0025], fig. 1 | 1-7 |
| Y | JP 2004-231915 A (LINTEC CORP) 19 August 2004 (2004-08-19) claims, paragraph [0023] | 1-7 |
| Y | WO 2020/095919 A1 (TATSUTA ELECTRIC WIRE & CABLE CO., LTD.) 14 May 2020 (2020-05-14) paragraph [0101] | 1-7 |
| Y | JP 2020-143222 A (NITTO DENKO CORP) 10 September 2020 (2020-09-10) paragraphs [0025]-[0026] | 6 |
| Y | JP 06-306336 A (SEKISUI CHEMICAL CO LTD) 01 November 1994 (1994-11-01) paragraphs [0023]-[0024] | 6 |

☑ Further documents are listed in the continuation of Box C.      ☑ See patent family annex.

| | |
|---|---|
| *     Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **07 April 2023** | **25 April 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

International application No.

**PCT/JP2023/004038**

**C.    DOCUMENTS CONSIDERED TO BE RELEVANT**

| Category* | Citation of document, with indication, where appropriate, of the relevant passages | Relevant to claim No. |
|---|---|---|
| A | US 2012/0295052 A1 (CHOI, Jeong-Wan) 22 November 2012 (2012-11-22)<br>entire text, all drawings | 1-7 |
| A | JP 2007-270034 A (DAINIPPON INK & CHEM INC) 18 October 2007 (2007-10-18)<br>entire text, all drawings | 1-7 |

Form PCT/ISA/210 (second sheet) (January 2015)

**INTERNATIONAL SEARCH REPORT**
Information on patent family members

International application No.

**PCT/JP2023/004038**

| Patent document cited in search report | | | Publication date (day/month/year) | Patent family member(s) | | | Publication date (day/month/year) |
|---|---|---|---|---|---|---|---|
| WO | 2004/083329 | A1 | 30 September 2004 | AU | 2003213401 | A | |
| JP | 2001-200218 | A | 24 July 2001 | (Family: none) | | | |
| JP | 2004-231915 | A | 19 August 2004 | (Family: none) | | | |
| WO | 2020/095919 | A1 | 14 May 2020 | CN | 112930378 | A | |
| | | | | KR | 10-2021-0087463 | A | |
| | | | | TW | 202018029 | A | |
| JP | 2020-143222 | A | 10 September 2020 | US | 2022/0177741 | A1 | |
| | | | | paragraphs [0028]-[0029] | | | |
| | | | | EP | 3936328 | A1 | |
| | | | | CN | 113518709 | A | |
| | | | | KR | 10-2021-0137084 | A | |
| JP | 06-306336 | A | 01 November 1994 | (Family: none) | | | |
| US | 2012/0295052 | A1 | 22 November 2012 | (Family: none) | | | |
| JP | 2007-270034 | A | 18 October 2007 | (Family: none) | | | |

Form PCT/ISA/210 (patent family annex) (January 2015)

**EP 4 477 392 A1**

**REFERENCES CITED IN THE DESCRIPTION**

**Patent documents cited in the description**

- JP 2014070221 A